# EUROPÄISCHE PATENTSCHRIFT

(11) **EP 1 573 662 B1**
(45) Veröffentlichungstag und Bekanntmachung des Hinweises auf die Patenterteilung: **01.09.2010**
(21) Anmeldenummer: 03782348.1
(22) Anmeldetag: 09.12.2003
(51) Int. Cl.: G06K 19/067, G06K 19/07, G06K 7/00, H03J 3/00, H03H 7/00, H03B 5/00, G01S 13/02

(54) **TRANSPONDER ZUR BERÜHRUNGSLOSEN ÜBERTRAGUNG VON DATEN**
TRANSPONDER FOR CONTACTLESSLY TRANSMITTING DATA
TRANSPONDEUR POUR LA TRANSMISSION SANS CONTACT DE DONNEES

(30) Priorität: 13.12.2002 DE 10258670
(43) Veröffentlichungstag der Anmeldung: 14.09.2005
(73) Patentinhaber: Giesecke & Devrient GmbH, 81677 München (DE)
(72) Erfinder: FINKENZELLER, Klaus, 80939 München (DE); SCHRÖDER, Sönke, 81541 München (DE)
(74) Vertreter: Klunker . Schmitt-Nilson . Hirsch
(86) Internationale Anmeldenummer: PCT/EP2003/013956
(87) Internationale Veröffentlichungsnummer: WO 2004/055721

(56) Entgegenhaltungen:
- EP-A2- 0 977 145
- WO-A-01/50547
- WO-A-02/50758
- WO-A1-03/100721
- DE-A- 19 953 334
- US-B1- 6 378 774
- PATENT ABSTRACTS OF JAPAN vol. 2000, no. 21, 3. August 2001 (2001-08-03) -& JP 2001 101371 A (DAINIPPON PRINTING CO LTD), 13. April 2001 (2001-04-13)
- PATENT ABSTRACTS OF JAPAN vol. 2000, no. 20, 10. Juli 2001 (2001-07-10) -& JP 2001 076111 A (HITACHI KOKUSAI ELECTRIC INC), 23. März 2001 (2001-03-23)

## Beschreibung

Die Erfindung betrifft einen Transponder zur berührungslosen Übertragung von Daten gemäß dem Oberbegriff des Anspruchs 1. Weiterhin betrifft die Erfindung einen tragbaren Datenträger, der einen derartigen Transponder aufweist.

Transponder werden vielfältig zur Kennzeichnung von Gegenständen oder Tieren, zur Durchführung von Zugangskontrollen, zur Abwicklung von Transaktionen des Zahlungsverkehrs usw. eingesetzt. In der Regel weist ein Transponder eine elektronische Schaltung und eine Antennenspule auf und ist in der Lage, eine berührungslose Datenübertragung mittels eines magnetischen oder eines elektromagnetischen Wechselfelds durchzuführen. Die Ausgestaltung der Transponder hängt dabei jeweils sehr stark von dem vorgesehenen Anwendungsgebiet ab. Dies gilt insbesondere auch für die Ausbildung der Antennenspule. Bei vielen Anwendungen weist der Transponder eine flache Antennenspule mit einigen wenigen Windungen auf und ist in einen tragbaren Datenträger, wie beispielsweise eine kontaktlos betreibbare Chipkarte, eingebettet. Um eine derartige Antennenspule mit der elektronischen Schaltung zu verbinden, die üblicherweise als ein Mikrochip ausgebildet ist, ist es erforderlich, dass ein Ende der Antennenspule die Windungen kreuzt. Dieses Ende der Antennenspule muss dabei isoliert über die einzelnen Windungen bis zum Mikrochip geführt werden. Dies ist beispielsweise mittels einer auf einer Isolierschicht aufgebrachten Leiterbahn möglich, mit der das Ende der Antennenspule über eine Durchkontaktierung verbunden wird. Die Herstellung einer derartigen Brücke ist allerdings relativ aufwendig, da mehrere Arbeitsschritte erforderlich sind.

Eine einfache Verkürzung der Antennenspule auf eine einzige Windung kommt zur Lösung des Kreuzungsproblems meist nicht in Betracht, da die Betriebsfrequenz des Transponders durch die Anwendung in der Regel fest vorgegeben ist und eine Änderung der Windungszahl eine Verschiebung der Resonanzfrequenz des Antennenschwingkreises zur Folge hätte. Wie beispielsweise aus der DE 100 29 673 A1 hervorgeht, würde sich dies nachteilig auf den Betrieb des Transponders auswirken. In der DE 100 29 673 A1 ist offenbart, dass bei einem passiven Transpondersystem zur Erzielung einer ausreichenden Reichweite eine Übereinstimmung der Resonanzfrequenz des Antennenschwingkreises des Transponders mit der Betriebsfrequenz erforderlich ist. Um jeweils eine möglichst optimale Anpassung an verschiedene Betriebsfrequenzen zu erzielen, wird vorgeschlagen, zwischen mehreren Antennenspulen umzuschalten sowie eine Grob- und Feinabstimmung der Resonanzfrequenz mit Hilfe weiterer frequenzbestimmender Bauteile vorzunehmen. Die Kreuzungsproblematik wird in der DE 100 29 673 A1 allerdings nicht thematisiert und die Antennenspulen des dort dargestellten Ausführungsbeispiels verfügen sogar jeweils über eine Kreuzung.

Die JP 2001 101 371 zeigt einen Transponder mit einem Chip, einer ersten Spule sowie einer zweiten und dritten Spule. Die Spulen sind jeweils magnetisch miteinander gekoppelt, aber voneinander galvanisch getrennt ausgebildet. Sie sind ferner nebeneinander oder ineinander verschachtelt. Dabei sind die Spulen für den Betrieb bei unterschiedlichen Frequenzen vorgesehen.

Aus der WO 02/50758 A1 ist eine Transponderlesevorrichtung zum Auslesen einer Mehrzahl von induktiven passiven Transpondern bekannt, die jeweils einen Resonanzkreis aufweisen. Die Transponderlesevorrichtung weist eine Senderspule sowie eine Nachstimmeinrichtung mit einer zweiten Spule und einem Kondensator auf. Die in diesem Dokument gezeigten Transponder verfügen jeweils nur über einen einzigen Schwingkreis.

Die DE 199 53 334 A1 beschreibt einen Transponder mit einer Vielzahl nebeneinander angeordneter Schwingkreise, die alle mit einem Primärschwingkreis induktiv gekoppelt sind und dabei so ausgebildet sind, daß sie jeweils Eigenfrequenzen des Transponders in einem Abstand von 1 MHz voneinander entfernt realisieren.

Die GB 2 246 492 A zeigt ein Tag mit einer Vielzahl von Resonanzschwingkreisen, die nebeneinander angeordnet sind und für verschiedene Frequenzen vorgesehen sind.

Aus der Europäischen Patentanmeldung EP 0 977145 A2 ist ein Transponder bekannt, der im Bereich des integrierten Schaltkreises eine erste und eine zweite Spule aufweist, die die gleiche Form aufweisen und gegenüberliegend angeordnet sind. Die beiden Spulen sind jeweils auf verschiedenen Trägern angeordnet, welche sich gegenüber liegen und durch einen isolierenden Film getrennt sind.

Die US 6,378,774 beschreibt eine Dual-Interface-Chipkarte, welche eine auf einem Inlett angeordnete Antenne aufweist, der eine im Chipmodul befindliche Antenne zugeordnet ist. Die Kopplung beider Antennen bewirkt eine Signalübertragung.

Anspruch 1 ist gegen diese Druckschrift abgegrenzt.

Die nach Art. 54 (3) EPÜ relevante WO 03/100721 offenbart ein Ausweisbuch (Pass) mit Transponder-Chips, die in einem durchsichtigen Träger auf den Papierseiten des Buchs untergebracht sind. Die Antenne besteht aus leitfähiger Tinte. Durch Öffnen und Schließen des Buchs werden die beiden Antennen entkoppelt oder gekoppelt, d.h. durch die Kopplung der Transponderantennen mit der Hauptantenne kann der Pass im geschlossenen Zustand besser elektronisch gelesen werden.

Der Erfindung liegt die Aufgabe zugrunde, einen Transponder so auszubilden, dass er mit einem geringen Aufwand und damit kostengünstig hergestellt werden kann.

Diese Aufgabe wird durch einen Transponder gemäß Anspruch 1 gelöst.

Die Faltung des flachen Trägers hat den Vorteil, dass der Träger nur einseitig zu bearbeiten ist. Der Träger kann als eine Folie ausgebildet sein und beispielsweise aus Papier oder Kunststoff hergestellt sein. Wenn viele Schwingkreise benötigt werden, kann es von Vorteil sein, mehrere Träger übereinander zu stapeln. Die Spulen können als Beschichtungen des Trägers ausgebildet sein. Auch für die Ausbildung der Kondensatoren kommen Beschichtungen in Betracht. Diese sind insbesondere als sich wenigstens partiell überdeckende erste und zweite Beschichtungsflächen auf beiden Hauptflächen des Trägers ausgebildet. Die wenigstens partielle Überdeckung kann dabei jeweils zwischen zwei benachbarten ersten Beschichtungsflächen auf der einen Hauptfläche und einer zweiten Beschichtungsfläche auf der gegenüberliegenden Hauptfläche des Trägers ausgebildet sein. Die beiden ersten Beschichtungsflächen können mit je einem Ende einer der Spulen galvanisch verbunden sein. Die Ausbildung der Spulen und/oder der Kondensatoren als Beschichtungen hat den Vorteil, dass der Transponder mit einem vergleichsweise geringen Aufwand hergestellt und sehr flach ausgeführt werden kann. Dabei ist es insbesondere von Vorteil, wenn die Beschichtungen drucktechnisch aufgebracht sind, da sich Strukturen mit Hilfe der Drucktechnik mit einer hohen Genauigkeit und sehr schnell und kostengünstig herstellen lassen.

Der Transponder kann für die verschiedensten Anwendungsfälle ausgelegt werden und der Aufwand zur Herstellung des Transponders ist dabei jeweils relativ gering. Der Transponder ist in der Regel so ausgebildet, daß seine Resonanzfrequenz von der Anzahl der Schwingkreise und von den Resonanzfrequenzen abhängt, die die Schwingkreise jeweils einzeln bei einem voneinander entkoppelten Betrieb aufweisen würden. Die Resonanzfrequenz der einzelnen Schwingkreise ist dabei kleiner als die kleinste Resonanzfrequenz der einzelnen Schwingkreise. Dies eröffnet die Möglichkeit, die Resonanzfrequenz des Transponders über die Anzahl und Ausbildung der einzelnen Schwingkreise optimal einzustellen.

Beim erfindungsgemäßen Transponder ist vorzugsweise lediglich ein Schwingkreis mit der elektronischen Schaltung galvanisch verbunden, so daß für die Herstellung der Verbindungen mit der elektronischen Schaltung ein vergleichsweise geringer Aufwand erforderlich ist. Am Betrieb des Transponders sind dennoch alle Schwingkreise gemeinsam beteiligt. Zumindest jeder Schwingkreis, der nicht mit der elektronischen Schaltung galvanisch verbunden ist, weist üblicherweise einen Kondensator auf. Da die Resonanzfrequenz des Transponders nicht nur über die Resonanzfrequenzen der einzelnen Schwingkreise, sondern auch über deren Anzahl beeinflußt werden kann, besteht für die einzelnen Schwingkreise jeweils der Freiheitsgrad, das Verhältnis zwischen Kapazität und Induktivität optimal einzustellen. Außerdem kann dem Kondensator jeweils ein ohmscher Widerstand parallel geschaltet sein, um den Schwingkreis zu bedämpfen.

Die Erfindung bezieht sich weiterhin auf einen tragbaren Datenträger zur Speicherung und/oder Verarbeitung von Daten, der einen erfindungsgemäß ausgebildeten Transponder aufweist und vorzugsweise als eine Chipkarte ausgeführt ist.

Die Erfindung wird im folgenden anhand den in der Zeichnungen dargestellten Ausführungsbeispiele erläutert.

Es zeigen
- Fig. 1: ein nicht erfindungsgemäßes Beispiel für einen Transponder, bei dem die Komponenten des Transponders gemein- sam auf einer Hauptfläche einer Trägerfolie angeordnet sind, in einer schematisierten Aufsicht,
- Fig. 2: ein Ausführungsbeispiel für den erfindungsgemäßen Transponder, bei dem die Komponenten des Transponders auf beiden Hauptflächen der Trägerfolie angeordnet sind, in einer schematisierten Aufsicht,
- Fig. 3: ein Ausführungsbeispiel für den erfindungsgemäßen Transponder mit faltbarer Trägerfolie in einer schematisierten Aufsicht und
- Fig. 4: ein Ausführungsbeispiel für auf die beiden Hauptflächen der Träger- folie aufgebrachte Beschichtungen in einer schematisierten Aufsicht.

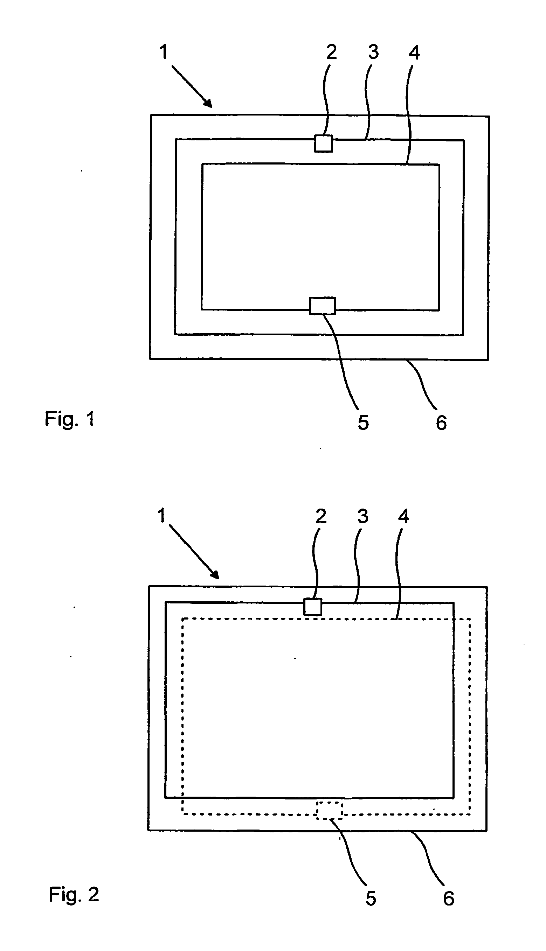

Fig. 1 zeigt ein nicht erfindungsgemäßes Beispiel eines Transponders 1 in einer schematisierten Aufsicht. Der Transponder 1 weist einen Mikrochip 2 auf, an den die Enden einer ersten Spule 3 angeschlossen sind. Innerhalb der ersten Spule 3 ist eine zweite Spule 4 angeordnet, deren Enden an einen Kondensator 5 angeschlossen sind. Die zweite Spule 4 ist weder mit der ersten Spule 3 noch mit dem Mikrochip 2 galvanisch verbunden. Die erste Spule 3 und die zweite Spule 4 verfügen jeweils nur über eine einzige Windung und sind zusammen mit dem Mikrochip 2 und dem Kondensator 5 auf einer Hauptfläche einer Trägerfolie 6 angeordnet, die zum Beispiel aus Papier oder Kunststoff gefertigt sein kann. Die erste Spule 3 und die zweite Spule 4 sind beispielsweise als eine elektrisch leitende Beschichtung ausgebildet und vorzugsweise aufgedruckt.

Der Transponder 1 kann Bestandteil eines tragbaren Datenträgers wie beispielsweise einer Chipkarte sein und ist in der Lage, eine berührungslose Datenübertragung durchzuführen. Hierzu wird der Datenträger, in den der Transponder 1 eingebaut ist, in den Wirkungsbereich eines periodisch wechselnden magnetischen oder elektromagnetischen Felds gebracht, das von einem Lesegerät oder einem Schreib-/Lesegerät erzeugt wird. Die erste Spule 3 und die Eingangskapazität des Mikrochips 2 sowie die zweite Spule 4 und der Kondensator 5 bilden jeweils einen elektrischen Schwingkreis aus, der in dem Feld zu Schwingungen angeregt wird. Die Ankopplung der Schwingkreise an das Feld ist dann besonders ausgeprägt, wenn die Resonanzfrequenz der Schwingkreise der Frequenz des anregenden Feldes entspricht. Grundsätzlich wird die Resonanzfrequenz der Schwingkreise jeweils durch die darin enthaltenen Induktivitäten und Kapazitäten festgelegt, d. h. durch die erste Spule 3 und die Eingangskapazität des Mikrochips 2 bzw. durch die zweite Spule 4 und den Kondensator 5.

Durch die Ausbildung des Transponders 1 kommt es zu Abweichungen gegenüber diesem grundsätzlichen Verhalten zweier getrennter Schwingkreise. Die beiden Schwingkreise des Transponders 1 sind bedingt durch die räumliche Nähe der ersten Spule 3 und der zweiten Spule 4 magnetisch miteinander gekoppelt. Dies hat zur Folge, dass sich die beiden Schwingkreise nach außen wie ein einziger Schwingkreis verhalten und über eine gemeinsame Resonanzfrequenz verfügen. Die gemeinsame Resonanzfrequenz ist kleiner als der niedrigere Wert für die Resonanzfrequenzen der beiden Schwingkreise im ungekoppelten Fall. Bei zwei identischen Schwingkreisen reduziert sich die Resonanzfrequenz durch die magnetische Kopplung ca. um den Faktor √2. Bei mehr als zwei Schwingkreisen ist als Faktor die Quadratwurzel aus der Anzahl der Schwingkreise anzusetzen. Dies bedeutet, dass ein Schwingkreis mit einer bestimmten Resonanzfrequenz durch mehrere magnetisch gekoppelte Schwingkreise mit einer jeweils höheren Resonanzfrequenz ersetzt werden kann. Da für die Realisierung einer höheren Resonanzfrequenz eine Spule mit einer geringeren Windungszahl benötigt wird, kann durch den Einsatz mehrerer Schwingkreise zur Erzielung der gleichen Resonanzfrequenz im Vergleich zu einem einzigen Schwingkreis jeweils die Windungszahl der Spulen reduziert werden.

Bei einer bei Chipkarten typischerweise verwendeten Frequenz von 13,56 MHz und den Abmessungen einer Chipkarte im Format ID-1 besteht die Möglichkeit, durch den Einsatz mehrerer Spulen die Windungszahl jeweils auf einige wenige Windungen oder gar eine einzige Windung zu reduzieren. Von diesen Spulen wird nur die erste Spule 3 an den Mikrochip 2 angeschlossen. Die restlichen Spulen werden analog zu der in Fig. 1 dargestellten zweiten Spule 4 an je einen Kondensator 5 angeschlossen, mit dem jeweils die Resonanzfrequenz des einzelnen Schwingkreises abgeglichen werden kann. Wenn die Eingangskapazität des Mikrochips 2 zu gering ist, kann auch parallel zum Mikrochip 2 ein Kondensator 5 geschaltet werden. Zudem besteht die Möglichkeit, den Kondensatoren 5 jeweils einen ohmschen Widerstand zur Bedämpfung des Schwingkreises parallel zu schalten. Durch die Verwendung von Spulen mit jeweils nur einer einzigen Windung können Leitungskreuzungen, die beispielsweise beim Anschließen der beiden Enden einer flachen Spule mit mehreren Windungen an den Mikrochip 2 auftreten würden, vermieden werden. Da es in der Regel möglich ist, eine einzelne Leitungskreuzung durch den Mikrochip 2 zu realisieren, kann auch eine Variante mit Spulen, die jeweils über zwei Windungen verfügen, noch ohne Leitungskreuzungen außerhalb des Mikrochips 2 gestaltet werden.

Das in Fig. 1 dargestellte Beispiel des Transponders 1 lässt sich mit einem relativ geringen Aufwand realisieren, da nur auf einer Hauptfläche der Trägerfolie 6 Komponenten des Transponders 1 aufgebracht werden müssen. Allerdings sollte für eine optimale Ausbildung des Transponders 1 die von der ersten Spule 3 und der zweiten Spule 4 jeweils eingeschlossene Fläche möglichst groß sein. Der Erreichung dieser Zielsetzung sind bei der ineinander geschachtelten Anordnung der ersten Spule 3 und der zweiten Spule 4 gemäß Fig. 1 jedoch Grenzen gesetzt. Das in Fig. 2 dargestellte erfindungsgemäße Ausführungsbeispiel des Transponders 1 bietet diesbezüglich mehr Möglichkeiten.

Fig. 2 zeigt ein erfindungsgemäßes Ausführungsbeispiel des Transponders 1 in einer schematisierten Aufsicht. Bei diesem Ausführungsbeispiel sind auf beiden Hauptflächen der Trägerfolie 6 Komponenten des Transponders 1 aufgebracht. Um auch die auf der Rückseite angeordneten Komponenten darstellen zu können, sind diese relativ zur Trägerfolie 6 nach rechts unten verschoben gezeichnet und durch Verwendung einer unterbrochenen Linienführung kenntlich gemacht. Die auf der Vorderseite angeordneten Komponenten sind relativ zur Trägerfolie 6 nach links oben verschoben und mittels durchgezogener Linien dargestellt. Auf der Vorderseite der Trägerfolie 6 ist die erste Spule 3 inklusive des daran angeschlossenen Mikrochips 2 angeordnet. Die zweite Spule 4 und der Kondensator 5 befinden sich auf der Rückseite der Trägerfolie 6. Die erste Spule 3 und die zweite Spule 4 weisen bei diesem Ausführungsbeispiel die gleichen Abmessungen auf und sind deckungsgleich zueinander auf der Trägerfolie 6 positioniert, so dass die zweite Spule 4 ohne die in Fig. 2 angewandte Verschiebung von der ersten Spule 3 vollständig verdeckt würde. Sowohl die erste Spule 3 als auch die zweite Spule 4 weist jeweils nur eine einzige Windung auf, so dass keine Leitungskreuzungen für den Anschluss der ersten Spule 3 an den Mikrochip 2 sowie für den Anschluss der zweiten Spule 4 an den Kondensator 5 erforderlich sind. Zudem sind die erste Spule 3 und die zweite Spule 4 jeweils nahe am Rand der Trägerfolie 6 entlanggeführt und nutzen somit die verfügbare Fläche sehr gut aus. Da die erste Spule 3 und die zweite Spule 4 lediglich durch die dünne Trägerfolie 6 voneinander getrennt sind, liegt eine enge magnetische Kopplung vor.

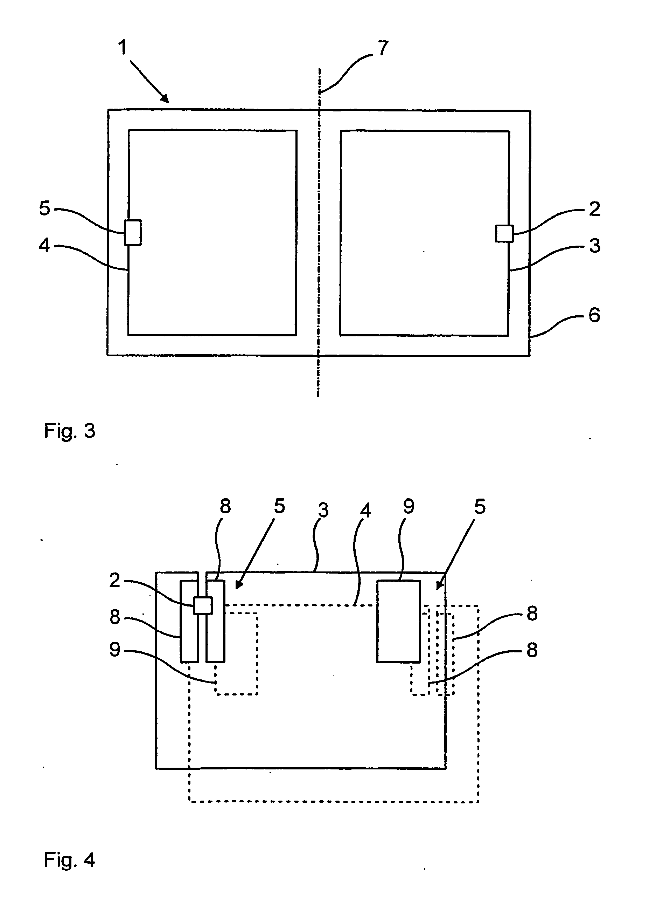

Zur Herstellung des in Fig. 2 dargestellten Ausführungsbeispiels des Transponders 1 besteht die Möglichkeit, die erste Spule 3 auf die Vorderseite und die zweite Spule 4 auf die Rückseite der Trägerfolie 6 aufzubringen, beispielsweise mittels eines geeigneten Druckverfahrens. Ein gemäß Fig. 2 ausgebildeter Transponder 1 lässt sich allerdings auch durch eine nur einseitige Bearbeitung der Trägerfolie 6 herstellen. Dies wird anhand von Fig. 3 erläutert.

Fig. 3 zeigt ein weiteres erfindungsgemäßes Ausführungsbeispiel des Transponders 1 in einer schematisierten Aufsicht. Bei diesem Ausführungsbeispiel sind sämtliche Komponenten des Transponders 1 auf der gleichen Hauptfläche der Trägerfolie 6 angeordnet. Die Besonderheit besteht dabei darin, dass die Trägerfolie 6 zunächst doppelt so groß wie die gewünschte Abmessung des Transponders 1 hergestellt wird und nach dem Bestücken mit den Komponenten des Transponders 1 entlang einer mittig durch die Trägerfolie 6 verlaufenden Faltachse 7 gefaltet wird. Die Faltung wird dabei so vorgenommen, dass die Komponenten auf den beiden Außenseiten der gefalteten Trägerfolie 6 angeordnet sind. Die erste Spule 3 und die zweite Spule 4 sind analog zum Ausführungsbeispiel der Fig. 2 identisch ausgebildet und werden durch das Falten miteinander zur Deckung gebracht, wobei die zweilagig dazwischenliegende Trägerfolie 6 eine elektrische Isolierung zwischen der ersten Spule 3 und der zweiten Spule 4 sicherstellt. Bei dem in Fig. 3 dargestellten Ausführungsbeispiel sind der Mikrochip 2 und der Kondensator 5 so angeordnet, dass sie nach dem Falten übereinander zu liegen kommen. Ebenso ist es mit der Falttechnik aber beispielsweise auch möglich, die in Fig. 2 dargestellte Anordnung zu realisieren.

Fig. 4 zeigt ein Ausführungsbeispiel für auf die beiden Hauptflächen der Trägerfolie 6 aufgebrachte Beschichtungen in einer schematisierten Aufsicht. Analog zur Darstellungsform der Fig. 2 ist die Beschichtung auf der Vorderseite der Trägerfolie 6 mit durchgezogenen Linien dargestellt und nach links oben verschoben und die Beschichtung auf der Rückseite mit unterbrochenen Linien dargestellt und nach rechts unten verschoben. Tatsächlich, d. h. ohne diese aus Anschauungsgründen vorgenommenen Verschiebungen sind die durch die Beschichtung auf der Vorderseite ausgebildete erste Spule 3 und die durch die Beschichtung auf der Rückseite ausgebildete zweite Spule 4 weitgehend deckungsgleich übereinander angeordnet. Die Trägerfolie 6, auf der die Beschichtungen aufgebracht sind, ist aus Gründen der Übersichtlichkeit nicht eingezeichnet.

Die Besonderheit des in Fig. 4 dargestellten Ausführungsbeispiels besteht darin, dass durch die Beschichtungen nicht nur die erste Spulen 3 und die zweite Spule 4, sondern auch die Kondensatoren 5 ausgebildet werden, die für die Abstimmung der ersten Spule 3 und der zweiten Spule 4 auf eine gewünschte Resonanzfrequenz benötigt werden. Dabei ist die Geometrie der Beschichtungen so gewählt, dass für die Realisierung der Kondensatoren 5 keine Durchkontaktierungen durch die Trägerfolie 6 erforderlich sind. Dies wird dadurch ermöglicht, dass pro Kondensator 5 zwei nebeneinander angeordnete erste Beschichtungsflächen 8 vorgesehen sind, die mit den Enden der ersten Spule 3 oder der zweiten Spule 4 verbunden sind. Weiterhin weist jeder Kondensator 5 eine zweite Beschichtungsfläche 9 auf, die in ihren Abmessungen mit dem gesamten Außenmaß der beiden ersten Beschichtungsflächen 8 übereinstimmt und bezüglich ihrer Außenkontur im wesentlichen deckungsgleich zu den beiden ersten Beschichtungsflächen 8 auf der gegenüberliegenden Seite der Trägerfolie 6 angeordnet ist. Durch die vorstehend beschriebene Anordnung der beiden ersten Beschichtungsflächen 8 und der zweiten Beschichtungsfläche 9 werden zwei in Serie geschaltete Kapazitäten ausgebildet, die zusammengenommen den Kondensator 5 bilden. Im Ausführungsbeispiel gemäß Fig. 4 sind zwei derartig ausgebildete Kondensatoren 5 vorhanden. Bei einem dieser Kondensatoren 5 sind die ersten Beschichtungsflächen 8 auf der Vorderseite der Trägerfolie 6 angeordnet und mit den Enden der ersten Spule 3 sowie mit dem Mikrochip 2 galvanisch verbunden.

Die zugehörige zweite Beschichtungsfläche 9 ist auf der Rückseite der Trägerfolie 6 angeordnet. Bei dem anderen Kondensator 5 sind die ersten Beschichtungsflächen 8 auf der Rückseite der Trägerfolie 6 angeordnet und mit den Enden der zweiten Spule 4 verbunden. Die zugehörige zweite Beschichtungsfläche 9 ist in diesem Fall auf der Vorderseite der Trägerfolie 6 angeordnet.

Bei sämtlichen Ausführungsbeispielen können zusätzlich zu der ersten Spule 3 und der zweiten Spule 4 prinzipiell noch weitere Spulen vorgesehen sein. Die weiteren Spulen können auf weiteren Trägerfolien 6 angeordnet sein, so dass der Transponder 1 aus einem Stapel von mehreren Trägerfolien 6 besteht. In der Regel bietet es sich an, die erste Spule 3 und die zweite Spule 4 sowie gegebenenfalls weitere vorhandene Spulen und die zugehörigen Schwingkreise jeweils gleichartig auszubilden. Dies ist allerdings keine zwingende Voraussetzung für die Funktionsfähigkeit des erfindungsgemäßen Transponders 1.

Neben einer bevorzugten Anwendung bei kontaktlosen Chipkarten kann der erfindungsgemäße Transponder 1 auch bei Chipkarten eingesetzt werden, die zusätzlich über eine Kontaktfläche für eine berührende Kontaktierung verfügen. Dazu kann beispielsweise eine Trägerfolie 6, auf der die in Fig. 4 dargestellten Beschichtungen aufgebracht sind, in den Kartenkörper einlaminiert werden. Vor dem Implantieren eines Chipmoduls in den Kartenkörper werden die für den Anschluss des Mikrochips 2 vorgesehenen Kontakte durch eine Fräsoperation freigelegt.

## Patentansprüche

1. Transponder (1) zur berührungslosen Übertragung von Daten,
mit einer elektronischen Schaltung (2) und einer Antenneneinrichtung mit wenigstens zwei gemeinsam betreibbaren Schwingkreisen,
wobei die beiden Schwingkreise voneinander galvanisch getrennt ausgebildet sind und jeweils eine Spule (3,4) aufweisen,
wobei wenigstens zwei der Spulen (3, 4) bei Betrachtung des Transponders (1) in Aufsicht auf eine der Hauptseiten des Transponders im wesentlichen deckungsgleich übereinander angeordnet sind,
**dadurch gekennzeichnet,**
**dass** die Schwingkreise gemeinsam auf einer Hauptfläche eines flachen Trägers (6) aufgebracht sind und der Träger (6) gefaltet ist.

2. Transponder nach Anspruch 1, **dadurch gekenntzeichnet, dass** lediglich ein Schwingkreis mit der elektronischen Schaltung (2) galvanisch verbunden ist.

3. Transponder nach Anspruch 1 oder 2, **dadurch gekennzeichnet, dass** zumindest jeder Schwingkreis, der nicht mit der elektronischen Schaltung (2) galvanisch verbunden ist, einen Kondensator (5) aufweist.

4. Transponder nach Anspruch 3, **dadurch gekennzeichnet, dass** dem Kondensator (5) ein ohmscher Widerstand parallel geschaltet ist.

5. Transponder nach einem der vorhergehenden Ansprüche, **dadurch gekennzeichnet, dass** die Spulen (3, 4) identisch ausgebildet sind.

6. Transponder nach einem der Ansprüche 1 bis 5, **dadurch gekennzeichnet, dass** wenigstens einige der Spulen (3, 4) ineinandergeschachtelt angeordnet sind.

7. Transponder nach einem der vorhergehenden Ansprüche, **dadurch gekennzeichnet, dass** die Spulen (3, 4) jeweils eine einzige Windung aufweisen.

8. Transponder nach einem der vorhergehenden Ansprüche, **dadurch gekennzeichnet, dass** der Träger (6) als eine Folie ausgebildet ist.

9. Transponder nach einem der vorhergehenden Ansprüche, **dadurch gekennzeichnet, dass** der Träger (6) aus Papier oder Kunststoff hergestellt ist.

10. Transponder nach einem der vorhergehenden Ansprüche, **dadurch gekennzeichnet, dass** mehrere Träger (6) übereinander gestapelt sind.

11. Transponder nach einem der vorhergehenden Ansprüche, **dadurch gekennzeichnet, dass** die Spulen (3, 4) als Beschichtungen des Trägers (6) ausgebildet sind.

12. Transponder nach Anspruch 3, **dadurch gekennzeichnet, dass** der Kondensator (5) als sich wenigstens partiell überdeckende erste und zweite Beschichtungsflächen (8, 9) auf beiden Hauptflächen des Trägers (6) ausgebildet ist.

13. Transponder nach Anspruch 12, **dadurch gekennzeichnet, dass** die wenigstens partielle Überdeckung jeweils zwischen zwei benachbarten ersten Beschichtungsflächen (8) auf der einen Hauptfläche und einer zweiten Beschichtungsfläche (9) auf der anderen Hauptfläche des Trägers (6) ausgebildet ist.

14. Transponder nach Anspruch 13, **dadurch gekennzeichnet, dass** die beiden ersten Beschichtungsflächen (8) mit je einem Ende einer der Spulen (3, 4) galvanisch verbunden sind.

15. Transponder nach einem der Ansprüche 11 bis 14, **dadurch gekennzeichnet, dass** die Beschichtungen gedruckte Beschichtungen sind.

16. Tragbarer Datenträger zur Speicherung und/ oder Verarbeitung von Daten, **dadurch gekennzeichnet, dass** der Datenträger einen Transponder (1) nach einem der vorhergehenden Ansprüche aufweist.

17. Datenträger nach Anspruch 16, **dadurch gekennzeichnet, dass** der Datenträger als eine Chipkarte ausgebildet ist.

## Claims

1. A transponder (1) for contactless transmission of data,
having an electronic circuit (2) and an antenna device with at least two jointly operable resonant circuits,
wherein the two resonant circuits are configured so as to be galvanically isolated from each other (3, 4) and each have a coil (3, 4),
wherein at least two of the coils (3, 4) are superposed substantially congruently upon viewing of the transponder (1) in plan view on one of the main sides of the transponder,
**characterized in that**
the resonant circuits are applied jointly to one main surface of a flat carrier (6), and the carrier (6) is folded.

2. The transponder according to claim 1, **characterized in that** only one resonant circuit is galvanically connected to the electronic circuit (2).

3. The transponder according to claim 1 or 2, **characterized in that** at least each resonant circuit not galvanically connected to the electronic circuit (2) has a capacitor (5).

4. The transponder according to claim 3, **characterized in that** an ohmic resistor is connected in parallel to the capacitor (5).

5. The transponder according to any of the previous claims, **characterized in that** the coils (3, 4) are configured identically.

6. The transponder according to any of claims 1 to 5, **characterized in that** at least some of the coils (3, 4) are disposed so as to be nested in each other.

7. The transponder according to any of the previous claims, **characterized in that** the coils (3,4) each have a single winding.

8. The transponder according to any of the previous claims, **characterized in that** the carrier (6) is configured as a foil.

9. The transponder according to any of the previous claims, **characterized in that** the carrier (6) is produced from paper or plastic.

10. The transponder according to any of the previous claims, **characterized in that** a plurality of carriers (6) are stacked one above the another.

11. The transponder according to any of the previous claims, **characterized in that** the coils (3, 4) are configured as coatings of the carrier (6).

12. The transponder according to claim 3, **characterized in that** the capacitor (5) is configured as first and second coating surfaces (8, 9) overlapping each other at least partially on both main surfaces of the carrier (6).

13. The transponder according to claim 12, **characterized in that** the at least partial overlap is configured in each case between two adjacent first coating surfaces (8) on one main surface of the carrier (6) and a second coating surface (9) on the other main surface thereof.

14. The transponder according to claim 13, **characterized in that** the two first coating surfaces (8) are galvanically connected to one end each of one of the coils (3, 4).

15. The transponder according to any of claims 11 to 14, **characterized in that** the coatings are printed coatings.

16. A portable data carrier for storing and/or processing data, **characterized in that** the data carrier has a transponder (1) according to any of the previous claims.

17. The data carrier according to claim 16, **characterized in that** the data carrier is configured as a chip card.

## Revendications

1. Transpondeur (1) destiné à la transmission de données sans contact, comprenant un circuit électronique (2) et un dispositif d'antenne avec au moins deux circuits oscillants aptes à fonctionner en commun,
les deux circuits oscillants étant réalisés de telle façon qu'ils sont séparés galvaniquement l'un de l'autre et comportent chacun une bobine (3, 4),
au moins deux des bobines (3, 4) étant agencées l'une au-dessus de l'autre de telle manière qu'elles coïncident essentiellement en surface lors d'une observation du transpondeur (1) en vue de dessus d'un des côtés principaux du transpondeur,
**caractérisé en ce que** les circuits oscillants sont appliqués conjointement sur une surface principale d'un support plat (6) et que le support (6) est plié.

2. Transpondeur selon la revendication 1, **caractérisé en ce qu'**uniquement un circuit oscillant est relié galvaniquement au circuit électronique (2).

3. Transpondeur selon la revendication 1 ou 2, **caractérisé en ce qu'**au moins chaque circuit oscillant non relié galvaniquement au circuit électronique (2) comporte un condensateur (5).

4. Transpondeur selon la revendication 3, **caractérisé en ce qu'**une résistance ohmique est branchée en parallèle au condensateur (5).

5. Transpondeur selon une des revendications précédentes, **caractérisé en ce que** les bobines (3, 4) sont réalisées de façon identique.

6. Transpondeur selon une des revendications de 1 à 5, **caractérisé en ce qu'**au moins quelques unes des bobines (3, 4) sont agencées de telle manière qu'elles sont imbriquées les unes dans les autres.

7. Transpondeur selon une des revendications précédentes, **caractérisé en ce que** les bobines (3, 4) présentent chacune un seul enroulement.

8. Transpondeur selon une des revendications précédentes, **caractérisé en ce que** le support (6) est réalisé sous forme d'un film.

9. Transpondeur selon une des revendications précédentes, **caractérisé en ce que** le support (6) est fabriqué en papier ou en matière plastique.

10. Transpondeur selon une des revendications précédentes, **caractérisé en ce que** plusieurs supports (6) sont empilés les uns sur les autres.

11. Transpondeur selon une des revendications précédentes, **caractérisé en ce que** les bobines (3, 4) sont réalisées sous forme de revêtements du support (6).

12. Transpondeur selon la revendication 3, **caractérisé en ce que** le condensateur (5) est réalisé sous forme de première et deuxième surfaces de revêtement (8, 9) se chevauchant au moins partiellement sur les deux surfaces principales du support (6).

13. Transpondeur selon la revendication 12, **caractérisé en ce que** le chevauchement au moins partiel est respectivement réalisé entre deux premières surfaces de revêtement (8) avoisinantes sur la une surface principale et une deuxième surface de revêtement (9) sur l'autre surface principale du support (6).

14. Transpondeur selon la revendication 13, **caractérisé en ce que** les deux premières surfaces de revêtement (8) sont reliées galvaniquement chacune à une extrémité de l'une des bobines (3, 4).

15. Transpondeur selon une des revendications de 11 à 14, **caractérisé en ce que** les revêtements sont des revêtements imprimés.

16. Support de données portable pour la mémorisation et/ou le traitement de données, **caractérisé en ce que** le support de données comporte un transpondeur (1) selon une des revendications précédentes.

17. Support de données selon la revendication 16, **caractérisé en ce que** le support de données est réalisé en tant qu'une carte à puce.
